# EUROPEAN PATENT SPECIFICATION

(11) **EP 2 528 134 B1**
(45) Date of publication and mention of the grant of the patent: **06.08.2014**
(21) Application number: 10843127.1
(22) Date of filing: 24.11.2010
(51) Int. Cl.: H01M 2/10, B60K 1/04

(54) **BATTERY CASE FOR VEHICLE**
BATTERIEGEHÄUSE FÜR EIN FAHRZEUG
BAC D'ACCUMULATEUR POUR VÉHICULE

(30) Priority: 18.01.2010 JP 2010008135
(43) Date of publication of application: 28.11.2012
(73) Proprietor: Mitsubishi Jidosha Kogyo Kabushiki Kaisha, Tokyo 108-8410 (JP)
(72) Inventor: LOO, Weng Leong, Tokyo 108-8410 (JP); FUJIWARA, Yutaka, Tokyo 108-8410 (JP); YOSHIOKA, Hideki, Tokyo 108-8410 (JP); INOUE, Yasuhiro, Tokyo 108-8410 (JP); OGATA, Fumihiro, Tokyo 108-8410 (JP); TAKASAKI, Seiichi, Tokyo 108-8410 (JP); HONJO, Hideki, Tokyo 108-8410 (JP)
(74) Representative: Vossius & Partner
(86) International application number: PCT/JP2010/070864
(87) International publication number: WO 2011/086772

(56) References cited:
- GB-A- 306 895
- JP-A- 5 193 366
- JP-A- 2009 087 645
- US-A- 6 153 331
- US-A1- 2002 093 246

## Description

### Technical Field

The present invention relates to battery cases for vehicles, and more particularly, to a battery case for containing a battery for driving an electric vehicle.

### Background Art

In recent years, hybrid vehicles and electric vehicles have been widely developed, which vehicles are equipped with a large-capacity battery and configured to use, as one power source, a drive motor driven by the electric power supplied from the battery.

Battery cases mounted on such electric vehicles are constituted, for example, by a tray member for containing a battery, and a cover member covering the tray member.

In such a battery case, a plurality of battery modules are placed on the tray member. Accordingly, when the battery case is mounted on the vehicle body, the underside of the tray member and that of a frame member, by means of which the tray member is attached to the vehicle body, are warped downward due to the weight of the battery modules as a whole, posing a problem that the vehicle may possibly fail to meet a prescribed vehicle height. It is therefore necessary that the battery case have sufficiently high stiffness or rigidity, in order to prevent such warping.

As a method for securing sufficiently high rigidity of the battery case, there has been known to increase the thickness of the cover member or of the tray member, for example.

Also, Patent Document 1 identified below discloses a configuration wherein metal insert members are embedded in the peripheral wall of a tray member made of resin, as well as a method of forming the cover member and the tray member out of a reinforced resin which is obtained by mixing a resin with glass fibers and solidifying the mixture.

### Prior Art Literature

### Patent Document

Patent Document 1: Japanese Laid-open Patent Publication No. 2009-87645

### Summary of the Invention

### Problems to be Solved by the Invention

The technique disclosed in Patent Document 1 is, however, associated with a problem that the overall weight of the battery case is large because the metal insert members are embedded in the tray member.

Also, where the cover member and the tray member are made of the reinforced resin or the metal insert members are embedded in the tray member, the costs of these members undesirably increase.

Further, if the thickness of the cover member or of the tray member is increased in order to ensure sufficiently high rigidity, the overall thickness of the battery case also increases, with the result that the battery case undesirably occupies more space in the vehicle body.

The present invention was made to solve the above problem, and an object thereof is to provide a battery case for a vehicle whereby the weight and cost of the battery case can be reduced while at the same time ensuring sufficiently high rigidity of the battery case.

### Means for solving the Problems

To achieve the above object, claim 1 provides a battery case for containing a battery for driving a vehicle, comprising: a tray member made of a resin and configured to hold the battery, the tray member having a plurality of projections formed on a bottom thereof; and a tray reinforcing member arranged so as to face an outer surface of the tray member and having at least one reinforcing member constituted by a metal plate, the at least one reinforcing member being arranged on one side of the tray reinforcing member facing the tray member and raised from the one side of the tray reinforcing member, wherein a recess is formed at least in an outer surface of one of the projections so as to correspond in position to the reinforcing member, and the reinforcing member is received in the recess.

According to claim 2, in the battery case of claim 1, the tray member is configured to contain a plurality of batteries, and the projections are arranged such that the plurality of batteries are arrayed with the projections located therebetween.

According to claim 3, in the battery case of claim 1 or 2, the tray reinforcing member has a bottom wall covering a bottom plate of the tray member, and the reinforcing member is fixed to the bottom wall of the tray reinforcing member.

According to claim 4, in the battery case of claim 3, the reinforcing member is a cut-and-raised portion obtained by cutting a portion of the bottom wall and raising the cut portion.

According to claim 5, in the battery case of any one of claims 1 to 4, the tray reinforcing member has a frame member constituted by a metal plate covering an outer periphery of the tray member, and the reinforcing member is fixed to an inner peripheral wall of the frame member.

### Advantageous Effects of the Invention

In the battery case for a vehicle according to claim 1, the tray member made of a resin has the multiple projections formed on the bottom thereof, and the tray reinforcing member is arranged so as to face the outer surface of the tray member. The at least one reinforcing member constituted by a metal plate is arranged on the side of the tray reinforcing member facing the tray member and is raised from that side of the tray reinforcing member. Also, the recess is formed at least in the outer surfaces of one of the projections so as to correspond in position to the reinforcing member, and the reinforcing member is received in the recess.

Since the reinforcing member is received in the recess which is formed at least in the outer surfaces of one of the projections of the resin tray member so as to correspond in position to the reinforcing member, satisfactorily high rigidity of the tray member is ensured, and it is therefore possible to prevent the tray member from being warped due to the load applied by the battery and the like accommodated in the battery case.

Each of a cover member and the tray member is preferably made of a resin not containing reinforcing members. In this case, the cover and tray members do not include reinforced resin or metal insert members, and therefore, the overall weight as well as cost of the battery case can be reduced.

In the battery case for a vehicle according to claim 2, the projections of the tray member are arranged such that the multiple batteries are arrayed with the projections located therebetween. Since it is unnecessary to form additional separate projections for receiving the reinforcing members, sufficiently high rigidity of the battery case can be secured efficiently by making use of the existing shape of the tray member.

In the battery case for a vehicle according to claim 3, the reinforcing member is fixed to the bottom wall of the tray reinforcing member that covers the bottom plate of the tray member. Since the rigidity of the tray member can be further enhanced, it is possible to prevent the tray member from being warped due to the load applied the battery and the like accommodated in the battery case.

In the battery case for a vehicle according to claim 4, reinforcing member is constituted by the cut-and-raised portion obtained by cutting a portion of the bottom wall and raising the cut portion. Where the reinforcing member is constituted by such cut-and-raised portions, the number of component parts can be reduced, making it possible to reduce the weight and cost of the battery case.

In the battery case for a vehicle according to claim 5, the reinforcing member is fixed to the inner peripheral wall of the frame member which is constituted by a metal plate covering the outer periphery of the tray member, and it is therefore possible to prevent the reinforcing member from being warped at their opposite ends. Also, since the rigidity of the reinforcing member can be further enhanced, sufficiently high rigidity of the tray member can be secured by fitting the reinforcing member into the recess formed at least in one of the projections of the tray member, making it possible to prevent the tray member from being warped due to the load applied by the battery and the like.

Further, since satisfactorily high rigidity of the tray member is ensured by the frame member constituted by a metal plate, it is unnecessary to increase the thickness of the cover member or of the tray member in order to secure required rigidity, whereby the battery case can be mounted on the vehicle body without the need to create extra space for the battery case.

### Brief Description of the Drawings

FIG. 1 is a perspective view of an electric vehicle on which a battery case according to the present invention is mounted.
FIG. 2 illustrates a schematic configuration of the battery case shown in FIG. 1.
FIG. 3 is an exploded perspective view of the battery case according to a first embodiment, illustrated in FIG. 2.
FIG. 4 is a longitudinal sectional view taken along line A-A in FIG. 2.
FIG. 5 is an enlarged view of a ridge-like projection appearing in FIG. 4.
FIG. 6 is an exploded perspective view of a battery case according to a second embodiment of the present invention.
FIG. 7 is an exploded perspective view of a frame shown in FIG. 6.
FIG. 8 is a perspective view of a frame according to a modification of the second embodiment.
FIG. 9 is an exploded perspective view of the frame shown in FIG. 8.
FIG. 10 is an exploded perspective view of a battery case according to a third embodiment of the present invention.

### Mode of Carrying out the Invention

Embodiments of the present invention will be described below with reference to the accompanying drawings.

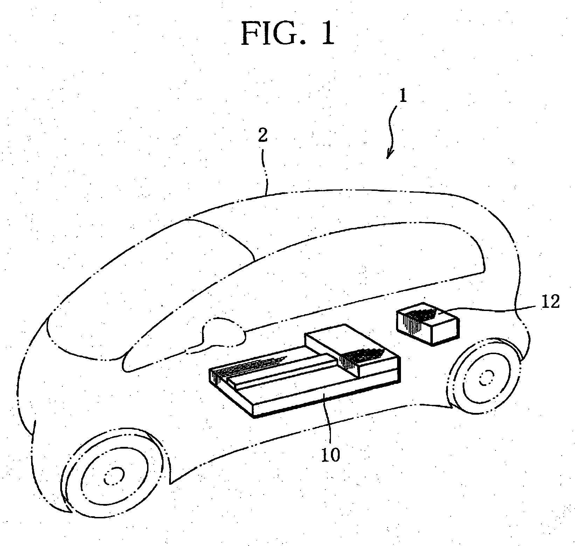

FIG. 1 is a perspective view of an electric vehicle on which a battery case according to the present invention is mounted.

As illustrated in FIG. 1, the electric vehicle 1 is equipped with a battery case 10 placed under the floor of a vehicle body 2 and a charging path, not shown, for receiving electric power from outside. A battery charger 12, which is supplied with electric power through the charging path for charging, is arranged in a rear part of the vehicle body 2. The battery case 10 is connected to the battery charger 12 and is configured so that the electric power from the battery charger 12 may be stored in a battery arranged therein.

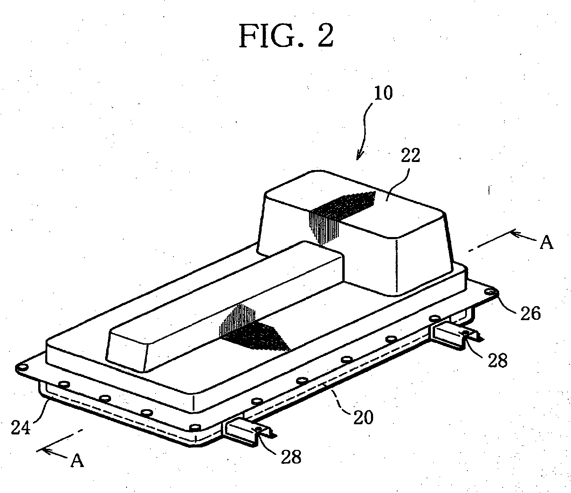

FIG. 2 illustrates a schematic configuration of the battery case 10.

The battery case 10 includes a tray (tray member) 20 made of a resin, a cover (cover member) 22, a frame (tray reinforcing member, frame member) 24 covering the outer periphery of the resin tray 20, fastening members 26 fastening the cover 22 and the frame 24 together, and brackets 28 by means of which the battery case 10 is attached to the vehicle body 2.

The tray 20 and the cover 22 are each formed by molding an electrically insulating resin containing no reinforcing members such as glass fibers or metal insert members.

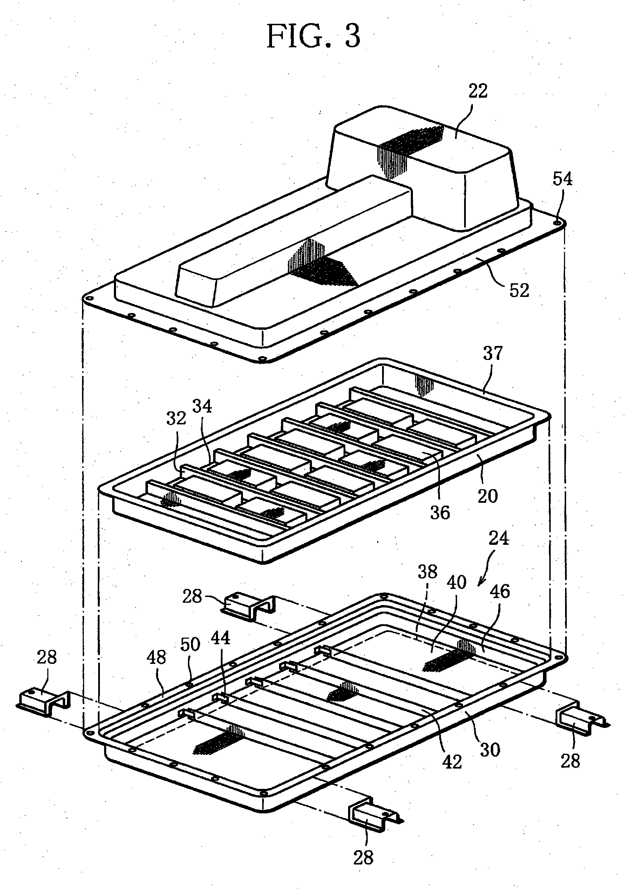

FIG. 3 is an exploded perspective view of the battery case 10 according to a first embodiment of the present invention.

The resin tray 20 has a plurality of ridge-like projections 32 formed on a bottom 34 thereof and extending in a width direction of the resin tray 20. The ridge-like projections 32 are provided so that battery modules (battery) 36 may be arrayed with the ridge-like projections 32 located therebetween. Each battery module 36 includes a plurality of lithium-ion battery cells connected in series. The battery to be used may be any other secondary battery and is not limited to lithium-ion battery.

A waterproof seal member is affixed to a contact surface 37 at the peripheral edge of the resin tray 20, though not illustrated in the figure, and when brought into contact with the cover 22, the seal member seals a gap between the peripheral edge portions of the resin tray 20 and cover 22, whereby waterproofness of the battery case 10 is ensured.

The outer periphery of the resin tray 20 is covered with the frame 24. The frame 24 is obtained, for example, by pressing and forming a metal plate into shape.

An inner frame edge 38 extends from the inner surface of the peripheral wall of the frame 24 by a predetermined distance toward the center of the frame 24. A bottom wall (tray reinforcing member) 40 of metal is laid on and fixed to the inner frame edge 38.

A plurality of L-shaped reinforcing members (reinforcing members) 42 are fixed on one side of the bottom wall 40 facing the resin tray 20 and are arranged at predetermined intervals. The longitudinally opposite ends of each L-shaped reinforcing member 42 are fixed by welding to the inner peripheral wall 46 by means of a pair of metal brackets 44, 44. Each L-shaped reinforcing member 42 is obtained, for example, by pressing and bending a metal plate into shape.

Mounting brackets 28, by means of which the frame 24 is attached to the vehicle body 2, are provided at the opposite end portions of longitudinal sections of an outer peripheral wall 30 of the frame 24. Although not shown, a crossbeam extends between a widthwise located pair of mounting brackets 28, 28 in parallel with the L-shaped reinforcing members 42 and is fixed on the lower surface of the inner frame edge 38 and of the bottom wall 40, that is, the surface opposite to the surface on which the L-shaped reinforcing members 42 are arranged.

Through holes 50 are formed in a peripheral edge portion 48 of the frame 24 at predetermined intervals. The peripheral edge portion 48 of the frame 24 and a peripheral edge portion 52 of the cover 22 are superimposed and brought into contact with each other.

The peripheral edge portion 52 of the cover 22 has through holes 54 formed therein so as to correspond in position to the respective through holes 50 formed in the peripheral edge portion 48 of the frame 24. The cover 22 and the frame 24 are fastened together by the fastening members 26 inserted through the through holes 50 and 54. Consequently, the contact surface of the cover 22 comes into close contact with the contact surface 37 of the resin tray 20 and the contact surface of the frame 24, whereby waterproofness of the battery case 10 is secured.

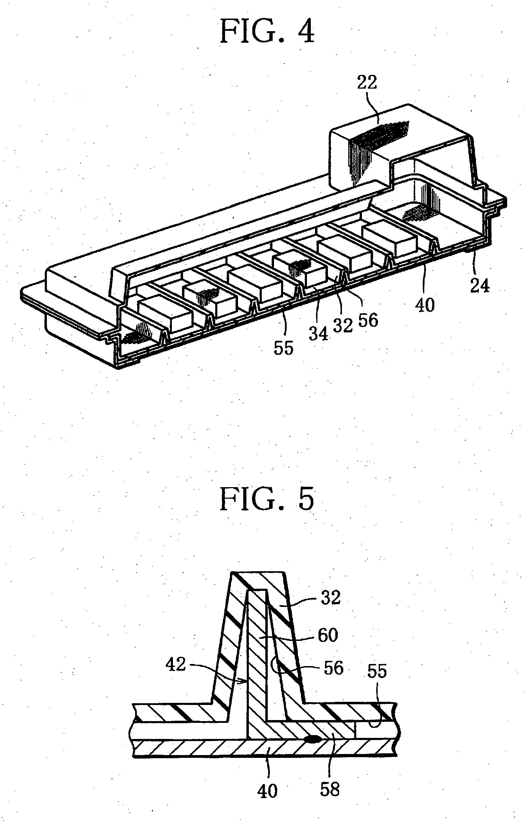

As illustrated in the longitudinal sectional view of FIG. 4 taken along line A-A in FIG. 2, the resin tray 20 is partitioned by the ridge-like projections 32 into sections, and the battery modules 36 are arranged in the respective sections. A groove-like recess 56 is formed in an outside lower surface of each ridge-like projection 32 facing the bottom wall 40, that is, in an outside lower surface 55 of the bottom plate of the resin tray 20. The recesses 56 are formed so as to correspond in position to the respective L-shaped reinforcing members 42.

Specifically, as shown in FIG. 5, each L-shaped reinforcing member 42 is fixed at its bottom 58 to the bottom wall 40 by welding. When the resin tray 20 is fitted into the frame 24, raised portions 60 of the L-shaped reinforcing members 42 are received in the respective groove-like recesses 56 formed in the outside lower surfaces of the ridge-like projections 32.

As stated above, in this embodiment, the resin tray 20 and the cover 22 are each made of a resin which does not contain reinforcing members such as glass fibers or metal insert members. The resin tray 20 has the ridge-like projections 32 formed thereon so that the battery modules 36 may be arrayed with the ridge-like projections 32 located therebetween, and the groove-like recesses 56 are formed in the outside lower surface 55 of the bottom plate of the resin tray 20 opposite the ridge-like projections 32. The outside of the resin tray 20 is covered with the frame 24 of metal and the bottom wall 40 fixed to the inner frame edge 38 of the frame 24. The L-shaped reinforcing members 42 are secured at their bottoms 58 by welding to the bottom wall 40 constituted by a metal plate, so as to be arranged at the predetermined intervals. Each L-shaped reinforcing member 42 is fixed to the frame 24 with the longitudinally opposite ends of the raised portion 60 thereof welded to the inner peripheral wall 46 by means of a pair of brackets 44, 44. As the resin tray 20 is fitted into the frame 24, the L-shaped reinforcing members 42 are received in the respective groove-like recesses 56 of the resin tray 20.

Thus, since the L-shaped reinforcing members 42 are made to fit into the respective groove-like recesses 56 formed in the outside lower surface 55 of the resin tray 20 opposite the ridge-like projections 32, the L-shaped reinforcing members 42 function as rigid members for increasing the rigidity of the resin tray 20. It is therefore possible to secure sufficiently high rigidity of the resin tray 20 as well as of the battery case 10.

Also, the resin tray 20 is covered as a whole with the frame 24 of metal. Thus, since it is possible to ensure sufficiently high rigidity of the resin tray 20 and of the battery case 10, the battery case 10 can be prevented from being warped due to the load applied by the battery modules 36 and the like.

The thickness of the resin tray 20 or of the cover 22 need not be increased in order to secure required rigidity, and it is therefore possible to keep the thickness of the battery case 10 from increasing and also to reduce the weight of the battery case 10.

The resin forming the tray 20 and the cover 22 does not contain reinforcing members such as glass fibers or metal insert members. Accordingly, the overall weight as well as cost of the battery case 10 can be reduced.

Further, the groove-like recesses 56 are formed in the outside lower surface 55 of the resin tray 20 opposite the ridge-like projections 32 which are formed to permit the battery modules 36 to be located in array, and the L-shaped reinforcing members 42 is fitted into the respective groove-like recesses 56. Accordingly, additional separate recesses for receiving the respective L-shaped reinforcing members 42 need not be formed in the resin tray 20, and the L-shaped reinforcing members 42 can be efficiently arranged.

Furthermore, each L-shaped reinforcing member 42 is fixed to the inner peripheral wall 46 of the frame 24 by means of a pair of brackets 44, 44, whereby the L-shaped reinforcing members 42 are prevented from being warped at their opposite ends and also the rigidity thereof can be enhanced. Since the L-shaped reinforcing members 42 fixed to the inner peripheral wall 46 are received in the respective groove-like recesses 56 formed in the outside lower surfaces of the ridge-like projections 32, moreover, sufficiently high rigidity of the resin tray 20 can be secured.

A second embodiment of the present invention will be now described.

A battery case for a vehicle according to the second embodiment differs from the counterpart of the first embodiment in that the L-shaped reinforcing members 42 are replaced by reinforcing members each obtained by cutting a portion of the bottom wall 40 and raising the cut portion upright. In the other respects, the second embodiment is identical in configuration with the first embodiment. Accordingly, explanation of the identical parts and elements is omitted, and only the differences will be explained.

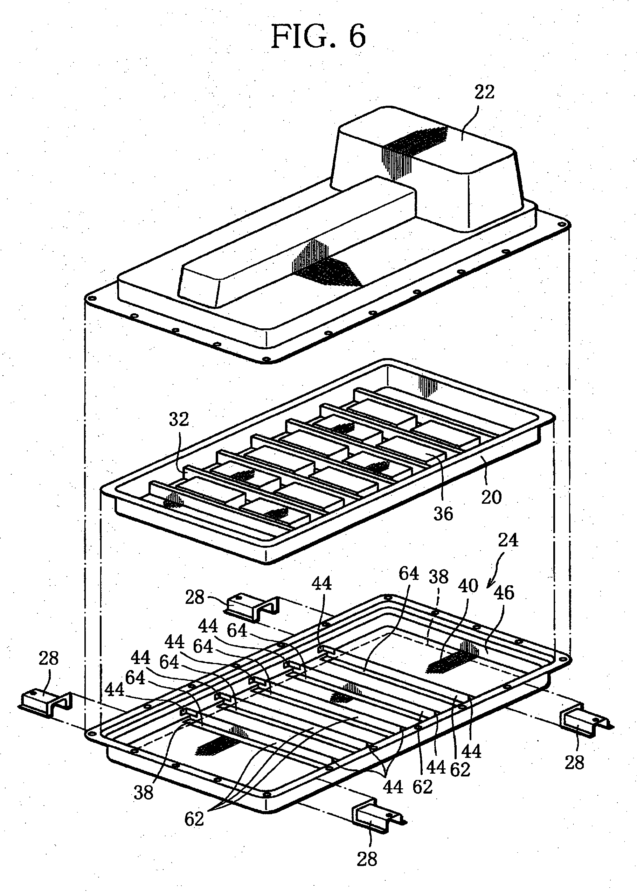

FIG. 6 is an exploded perspective view of the battery case according to the second embodiment of the present invention.

As shown in FIG. 6, the bottom wall 40 fixed to the inner frame edge 38 of the frame 24 has cut-and-raised portions (reinforcing members) 62 formed so as to correspond in position to the respective groove-like recesses 56 formed in outside lower surfaces of the ridge-like projections 32 of the resin tray 20.

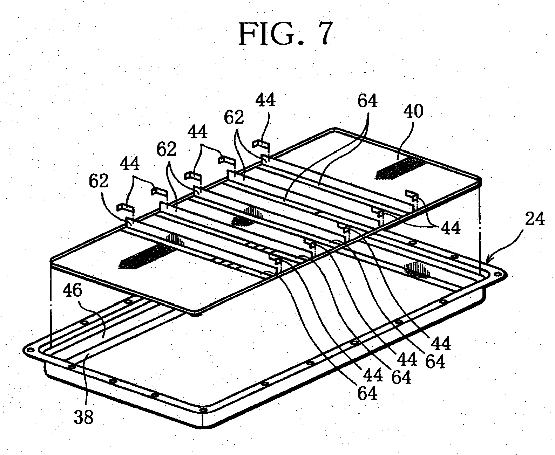

Specifically, as seen from FIG. 7, each cut-and-raised portion 62 is formed by cutting a portion of the bottom wall 40. The cut-and-raised portions 62 are formed in respective predetermined positions with respect to the width direction of the bottom wall 40 and are located inward of the longitudinally opposite ends and widthwise opposite side edges of the bottom wall 40. The cut-and-raised portions 62 are each formed by cutting a portion of the bottom wall 40 by a predetermined length and a predetermined width and bending the cut portion inward, or upward, so as to be raised upright. Consequently, the bottom wall 40 has the multiple cut-and-raised portions 62 and an equal number of openings 64 which are formed as the cut-and-raised portion 62 are bent inward, that is, toward a side where the bottom wall 40 is not disposed in contact with the inner frame edge 38 of the frame 24. The bottom wall 40 is fixed to the inner frame edge 38 of the frame 24.

Each cut-and-raised portion 62 is secured to the inner peripheral wall 46 of the frame 24 with its opposite ends welded to the inner surface of the inner peripheral wall 46 by means of a pair of brackets 44, 44. As the resin tray 20 is superimposed on and fitted into the frame 24, the cut-and-raised portions 62 are received in the respective groove-like recesses 56 which are formed in the outside lower surface 55 of the bottom plate of the resin tray 20 opposite the ridge-like projections 32.

Thus, according to this embodiment, the cut-and-raised portions 62, each formed by cutting a portion of the bottom wall 40, protrude from the bottom wall 40 fixed to the inner frame edge 38 of the frame 24, and the opposite ends of each cut-and-raised portion 62 are fixed by welding to the inner peripheral wall 46 of the frame 24 by means of a pair of brackets 44, 44. When the resin tray 20 is superimposed on and fitted into the frame 24, the cut-and-raised portions 62 are received in the respective groove-like recesses 56 formed in the outside lower surface 55 of the resin tray 20 opposite the ridge-like projections 32.

Because of the configuration described above, the cut-and-raised portions 62 serve as rigid members for enhancing the rigidity of the resin tray 20, thus providing the same advantageous effects as those achieved by the first embodiment.

Also, the cut-and-raised portions 62 are formed in the respective predetermined positions by cutting portions of the bottom wall 40 and are received in the respective groove-like recesses 56 formed in the resin tray opposite the ridge-like projections 32. Accordingly, the number of component parts required for the battery case 10 as a whole can be reduced, making it possible to reduce the weight as well as cost of the battery case 10.

A modification of the second embodiment will be now described.

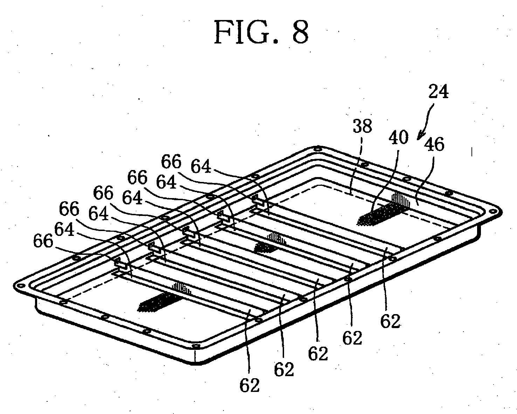

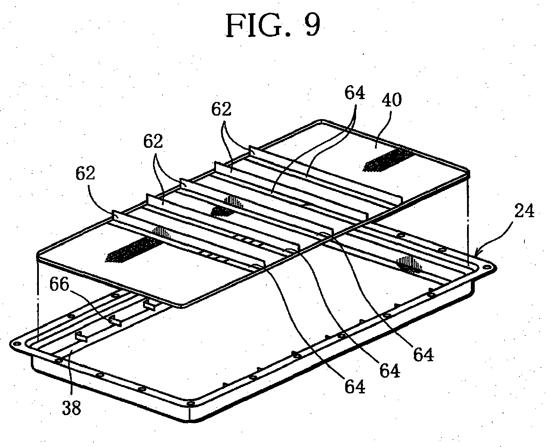

In the modification, as shown in the perspective view of FIG. 8 and the exploded perspective view of FIG. 9 both illustrating the frame 24 and the bottom wall 40, a plurality of cut-and-raised mounting portions 66 are formed to allow the cut-and-raised portions 62, each formed in a predetermined position by cutting a portion of the bottom wall 40, to be fixed at their opposite ends to the inner peripheral wall 46 of the frame 24. Each cut-and-raised mounting portion 66 is formed in a predetermined position by cutting a portion of the peripheral wall of the frame 24 longitudinally and bending the cut portion inward to be raised from the peripheral wall. A widthwise opposite pair of cut-and-raised mounting portions 66, 66 are fixed by welding to the longitudinally opposite ends of the corresponding cut-and-raised portion 62 on the same side as the opening 64, so that the cut-and-raised portion 62 is fixed to the inner peripheral wall 46 of the frame 24.

According to the modification described above, it is unnecessary to use the brackets 44 for fixing the bottom wall 40 to the inner peripheral wall 46 of the frame 24, whereby the number of component parts can be reduced, making it possible to reduce the weight and cost of the battery case 10.

A third embodiment of the present invention will be now described.

A battery case for a vehicle according to the third embodiment differs from the counterpart of the first embodiment in that the L-shaped reinforcing members 42 are laid so as to extend in the width direction of the frame 24 and each fixed to the frame 24 by a pair of brackets 44, 44. In the other respects, the third embodiment is identical in configuration with the first embodiment. Accordingly, explanation of the identical parts and elements is omitted, and only the differences will be explained.

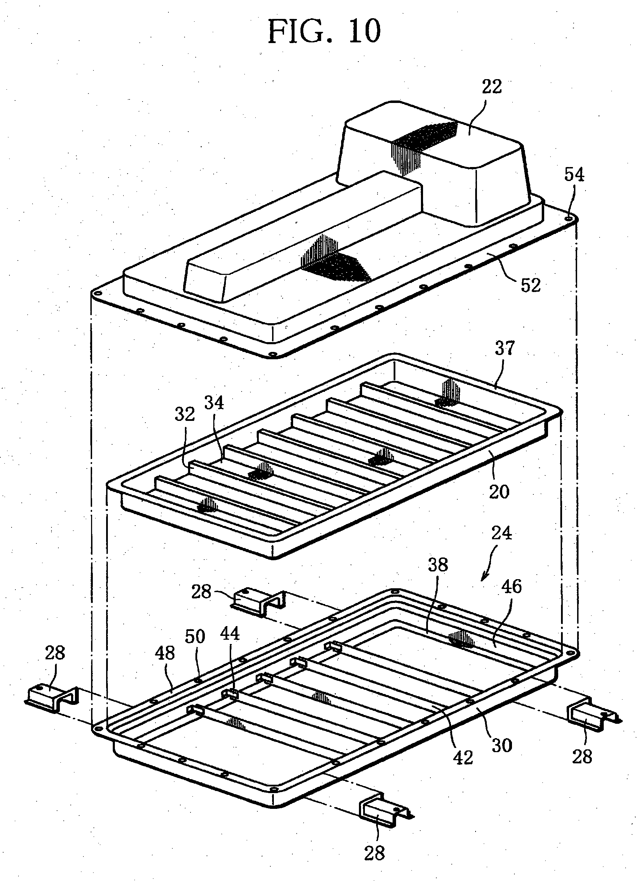

FIG. 10 is an exploded perspective view of the battery case according to the third embodiment of the present invention.

As shown in FIG. 10, the L-shaped reinforcing members 42 are laid so as to extend in the width direction of the frame 24, and the opposite ends of each L-shaped reinforcing member 42 are fixed by welding to the inner peripheral wall 46 of the frame 24 by means of a pair of brackets 44, 44. When the resin tray 20 is superimposed on and fitted into the frame 24, the L-shaped reinforcing members 42 are received in the respective groove-like recesses 56 formed in the outside lower surface 55 of the bottom plate of the resin tray 20 opposite the ridge-like projections 32.

Thus, according to this embodiment, the opposite ends of each L-shaped reinforcing member 42 extending in the width direction of the frame 24 are fixed by welding to the inner peripheral wall 46 of the frame 24 by a pair of brackets 44, 44, and as the resin tray 20 is superimposed on and fitted into the frame 24, the L-shaped reinforcing members 42 are received in the respective groove-like recesses 56 formed in the outside lower surface 55 of the resin tray 20 opposite the ridge-like projections 32.

Also with this configuration, the same advantageous effects as those achieved by the first embodiment can be obtained.

While the embodiments of the present invention have been described above, it is to be noted that the present invention is not limited to the foregoing embodiments.

For example, in the above embodiments, the bottom wall 40 of metal is fixed to the frame 24 so as to cover the outside of the resin tray 20. The frame to be used is not limited to such a frame alone. The frame may alternatively be formed by pressing a single metal plate into shape such that the frame obtained has a bottom.

Also, in the above embodiments, each L-shaped reinforcing member 42 is fixed to the inner peripheral wall 46 of the frame 24 by a pair of brackets 44, 44, or the cut-and-raised portions 62 are fixed to the inner peripheral wall 46 of the frame 24 by the respective cut-and-raised mounting portions 66. The manner of fixing the L-shaped reinforcing members or the cut-and-raised portions to the inner peripheral wall 46 is not limited to those described above. For example, the L-shaped reinforcing members 42 may be fixed to the inner peripheral wall 46 by the cut-and-raised mounting portions 66, or the L-shaped reinforcing members 42 or the cut-and-raised portions 62 may be directly fixed to the inner peripheral wall 46 by welding.

Further, in the foregoing embodiments, the electric vehicle is exemplified as a vehicle. The present invention is also equally applicable to hybrid vehicles.

### Explanation of Reference Signs

- 1: electric vehicle
- 10: battery case
- 20: resin tray (tray member)
- 24: frame (frame member)
- 32: projection
- 40: bottom wall
- 42: L-shaped reinforcing member (reinforcing member)
- 44: bracket
- 46: inner peripheral wall
- 56: recess
- 58: bottom
- 60: raised portion
- 62: cut-and-raised portion (reinforcing member)
- 66: cut-and-raised mounting portion

## Claims

1. A battery case for containing a battery for driving a vehicle, comprising:
a tray member made of a resin and configured to hold the battery, the tray member having a plurality of projections formed on a bottom thereof; and
a tray reinforcing member arranged so as to face an outer surface of the tray member and having at least one reinforcing member constituted by a metal plate, the at least one reinforcing member being arranged on one side of the tray reinforcing member facing the tray member and raised from the one side of the tray reinforcing member, wherein:
a recess is formed at least in an outer surface of one of the projections so as to correspond in position to the reinforcing member, and
the reinforcing members are received in the respective recesses.

2. The battery case according to claim 1, wherein:
the tray member is configured to contain a plurality of batteries, and
the projections are arranged such that the plurality of batteries are arrayed with the projections located therebetween.

3. The battery case according to claim 1 or 2, wherein:
the tray reinforcing member has a bottom wall covering a bottom plate of the tray member, and
the reinforcing member is fixed to the bottom wall of the tray reinforcing member.

4. The battery case according to claim 3, wherein the reinforcing member is a cut-and-raised portion obtained by cutting a portion of the bottom wall and raising the cut portion.

5. The battery case according to any one of claims 1 to 4, wherein:
the tray reinforcing member has a frame member constituted by a metal plate covering an outer periphery of the tray member, and
the reinforcing member is fixed to an inner peripheral wall of the frame member.

## Patentansprüche

1. Batteriegehäuse zum Aufnehmen einer Batterie zum Antreiben eines Fahrzeugs, mit:
einem Schalenelement, das aus einem Harz hergestellt und dafür konfiguriert ist, die Batterie zu halten, wobei das Schalenelement mehrere auf seinem Boden ausgebildete Vorsprünge aufweist; und
einem Schalenverstärkungselement, das derart angeordnet ist, dass es einer Außenfläche des Schalenelements zugewandt ist und mindestens ein durch eine Metallplatte gebildetes Verstärkungselement aufweist, wobei das mindestens eine Verstärkungselement auf einer dem Schalenelement zugewandten Seite des Schalenverstärkungselements angeordnet und von der einen Seite des Schalenverstärkungselements erhöht ist, wobei:
mindestens in einer Außenfläche eines der Vorsprünge eine Vertiefung derart ausgebildet ist, dass ihre Position derjenigen des Verstärkungselements entspricht, und
die Verstärkungselemente in den jeweiligen Vertiefungen aufgenommen sind.

2. Batteriegehäuse nach Anspruch 1, wobei:
das Schalenelement dafür konfiguriert ist, mehrere Batterien aufzunehmen, und
die Vorsprünge derart angeordnet sind, dass sie zwischen in einem Muster angeordneten Batterien angeordnet sind.

3. Batteriegehäuse nach Anspruch 1 oder 2, wobei:
das Schalenverstärkungselement eine eine Bodenplatte des Schalenelements abdeckende Bodenwand aufweist, und
das Verstärkungselement an der Bodenwand des Schalenverstärkungselements befestigt ist.

4. Batteriegehäuse nach Anspruch 3, wobei das Verstärkungselement ein eingeschnittener und angehobener Abschnitt ist, der durch Einschneiden eines Teils der Bodenwand und Anheben des eingeschnittenen Abschnitts erhalten wird.

5. Batteriegehäuse nach einem der Ansprüche 1 bis 4, wobei:
das Schalenverstärkungselement ein Rahmenelement aufweist, das durch eine einen Außenumfang des Schalenelements abdeckende Metallplatte gebildet wird, und
das Verstärkungselement an einer Innenumfangswand des Rahmenelements befestigt ist.

## Revendications

1. Boîtier de batterie d'accumulateurs destiné à contenir une batterie d'accumulateurs pour l'entraînement d'un véhicule, comprenant :
un élément en plateau en résine, prévu pour supporter la batterie, ledit élément en plateau présentant une pluralité de saillies formées sur son fond ; et
un élément en plateau de renforcement disposé de manière à être opposé à une surface extérieure de l'élément en plateau et présentant au moins un élément de renforcement formé par une plaque métallique, le ou les éléments de renforcement étant disposés sur une face de l'élément en plateau de renforcement opposée à l'élément en plateau et se dressant verticalement sur la première face de l'élément en plateau de renforcement, où:
une cavité est formée au moins sur une surface extérieure d'une des saillies de manière à correspondre à l'élément de renforcement positionné, et où
les éléments de renforcement sont logés dans les cavités correspondantes.

2. Boîtier de batterie d'accumulateurs selon la revendication 1, où :
l'élément en plateau est prévu pour contenir une pluralité d'accumulateurs, et où les saillies sont disposées de telle manière que la pluralité d'accumulateurs est déployée avec les saillies se dressant entre les accumulateurs.

3. Boîtier de batterie d'accumulateurs selon la revendication 1 ou la revendication 2, où :
l'élément en plateau de renforcement présente une paroi de base recouvrant une plaque de base de l'élément en plateau, et où
l'élément de renforcement est fixé sur la paroi de base de l'élément en plateau de renforcement.

4. Boîtier de batterie d'accumulateurs selon la revendication 3, où l'élément de renforcement est un segment découpé et dressé obtenu par découpe d'une partie de la paroi de base et dressage de la partie découpée.

5. Boîtier de batterie d'accumulateurs selon l'une des revendications 1 à 4, où :
l'élément en plateau de renforcement présente un élément de cadre composé d'une plaque métallique recouvrant une périphérie extérieure de l'élément en plateau, et où l'élément de renforcement est fixé sur une paroi périphérique intérieure de l'élément de cadre.
